# EUROPEAN PATENT APPLICATION

(11) **EP 4 277 317 A2**
(43) Date of publication of application: **15.11.2023**
(21) Application number: 23199062.3
(22) Date of filing: 26.02.2014
(51) Int. Cl.: H04W 12/04, H04W 4/02, G07C 9/00

(54) **SEQUENCING THE VALIDITY OF ACCESS CONTROL KEYS**

(30) Priority: 13.03.2013 US 201361780413 P
(62) Divisional of application: 14730188.1
(71) Applicant: Assa Abloy AB, 107 23 Stockholm (SE)
(72) Inventor: ROBINTON, Mark, Eden Prairie, MN 55344 (US); HULUSI, Tam, Santa Ana, CA 92705 (US)
(74) Representative: Kramer Barske Schmidtchen Patentanwälte PartG mbB

(57) **Abstract**

Mechanisms are provided to sequence one or more access control keys residing on a mobile device to be used with an access control reader. In particular, solutions are described which allow a mobile device to receive one or more access control keys and receive additional sequence data. The sequence data may be created for a particular route or course such that a user is require to present the received access control keys to an access control reader in a particular order to gain access to a protected asset.

## Description

### FIELD OF THE INVENTION

The present invention is generally directed toward the use of access control keys.

### BACKGROUND

Some access control systems employ older or less technically-sophisticated and less secure technology to limit access or entry to a specific asset. For example, many access control systems rely upon a user presenting an access credential (e.g., a thing carried by a user) to an access control reader in order to gain authorized access to a building. Upon the user presenting the access credential, the access control reader may read an access credential identification number associated with the access credential and/or associated with the user to determine whether or not the access credential permits an entry or access to the building. In such an example, if a user desires to access more than one building, the user may be required to carry and present more than one credential (e.g. one credential for each building).

Other access control systems may utilize two-factor authentication when allowing authorized access to a protected asset. For example, many access control systems require a user to present a credential to an access control reader. The user then may be required to provide a personal identification number to prove that the user not only is in possession of the access credential, but also to authenticate themselves with respect to the access control system (i.e. prove something they know). Again, these access control systems suffer from the same problem; namely, a user would be required to carry and/or present more than one credential when accessing multiple protected assets, for example, a building.

The above two examples highlight a particular problem with some access control systems. If a user wishes to access more than one location or asset, a user may be required to carry one access credential for each location or asset. In such a situation, if a user loses one of the many access credentials, the lost access credential may fall into the hands of an unauthorized user. The unauthorized user can then access the protected asset fairly easily and as often as the unauthorized user wishes. Of course, once the access control reader is alerted to the lost access credential, the unauthorized user will not be able to access the protected asset; however, a significant amount of time may have passed in the meantime. Another problem with the prior access control systems is that a user may be required to remember multiple personal identification numbers, in addition to carrying multiple access credentials, in order to gain access to protected asset. It can often be easy to forget the one of many personal identification numbers causing downtime and delay.

### SUMMARY

It is, therefore, one aspect of the present disclosure to provide a system and method whereby one or more access control keys for gaining access to a protected asset reside on a single mobile device such that a user may carry one device containing multiple access control keys and present the access control key associated with the one or more protected assets. Further, one or more access control keys may be used sequentially. For example, a user wishing to gain access to one or more assets, such as buildings or structures, may do so in accordance with a preplanned route or course. A preplanned route or course may be especially common in maintenance or service industries where a user may need access to many places along a planned route. As one example, a user associated with a building maintenance company may be required to visit multiple buildings according to a preplanned route and/or schedule. As another example, a user associated with a delivery, pickup, or transport service may be required to visit one or more locations; the one or more locations may be visited according to a preplanned route in which an overall distance travelled is minimized.

In each of the above examples, a route or course may involve a user visiting a building at location A, visiting a building at location B, visiting a building at location C, and then visiting a building at location D. Of course, more or less locations may be included in a route or course and each route or course may be determined according to a specific need on a given day or time. At each building or location, a user may be required to present one or more distinct access control keys as a means of gaining authorized access to the building or structure. According to the preplanned route or course, all of the access control keys for a route or course may be downloaded to a mobile device, however, the access control keys for all of the location along the preplanned route or course may not be valid for use right away. Instead, each access control key may become valid based on the use of a previous access control key. Stated another way, a downloaded access control key residing on a mobile device may become valid once an access control key for another protected asset has been used. For example, in order for the access control key for a building at location C to become valid for use, the access control key for the building at location B must have been previously used or utilized. In such an instance, one or more access control keys are sequenced such that the use of one access control key may cause another access control key to become valid and ready for use.

In addition to sequencing an access control key such that the access control key depends on the use or utilization of another access control key, each downloaded access control key may be required to meet other criteria prior to becoming valid. For example, the validity of access control key C may depend on a predetermined validity schedule (e.g. between 10:30 am and 11:00 am), on a location (e.g. within 100 meters of location C), or any other criteria specified by an access control system.

As another example, a user may have the need to use several distinct access control keys in a given day, particularly based on a schedule. In accordance with embodiments of the present disclosure, ways to manage the sequence in which access control keys are valid are provided such that only the appropriate key(s) are active at any given time. For example, sequence data and access control keys may be delivered prior to use or updated if the sequence or set of keys changes. The user interface of a mobile device may consist of one or more places the user is to visit. For example, a list of addresses may be presented to the user, the list being displayed on the graphical user interface of the mobile device and corresponding to a particular route the user is to follow. Alternatively, or in addition, the user interface may present a map to the user, the map including one or more indicators that specify a location associated with a particular access control key and/or specifying a sequence or route. The user interface may also allow the user to indicate that their use of a key is completed. Upon indicating that their use of the key is completed, the next key in the sequence would then be activated. The previous key could be permanently deleted or temporarily deactivated in the event it appears later in the sequence again.

In accordance with at least some embodiments of the present invention, a method is provided that generally comprises: receiving one or more access control keys at a mobile device; determining whether or not a first access control key is valid; and presenting the valid first access control key to an access control reader.

It is yet another aspect of the present disclosure that a system is provided, the system generally comprising one or more mobile devices comprising: a wireless communication module; a memory configured to store one or more access control keys, wherein the one or more access control keys are received via the wireless communication module; a memory configured to store a key management module, wherein the key management module is configured to manage one or more access control keys; a processor operatively connected to the mobile device, wherein the processor is configured to execute the key management module; and one or more mobile key servers, wherein the mobile key server is operative to provide one or more access control keys to the one or more mobile devices; and wherein one or more access control keys are presented to an access control reader to gain access to a protected asset.

The Summary is neither intended nor should it be construed as being representative of the full extent and scope of the present invention. The present invention is set forth in various levels of detail and the Summary as well as in the attached drawings and in the detailed description of the invention and no limitation as to the scope of the present invention is intended by either the inclusion or non inclusion of elements, components, etc. in the Summary. Additional aspects of the present invention will become more readily apparent from the detailed description, particularly when taken together with the drawings.

The phrases "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

The term "a" or "an" entity refers to one or more of that entity. As such, the terms "a" (or "an"), "one or more" and "at least one" can be used interchangeably herein. It is also to be noted that the terms "comprising", "including", and "having" can be used interchangeably.

The term "automatic" and variations thereof, as used herein, refers to any process or operation done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material".

The term "computer-readable medium" as used herein refers to any tangible storage that participates in providing instructions to a processor for execution. Such a medium may take many forms, including but not limited to, non-volatile media, volatile media, and transmission media. Non-volatile media includes, for example, NVRAM, or magnetic or optical disks. Volatile media includes dynamic memory, such as main memory. Common forms of computer-readable media include, for example, a floppy disk, a flexible disk, hard disk, magnetic tape, or any other magnetic medium, magneto-optical medium, a CD-ROM, any other optical medium, punch cards, paper tape, any other physical medium with patterns of holes, a RAM, a PROM, and EPROM, a FLASH-EPROM, a solid state medium like a memory card, any other memory chip or cartridge, or any other medium from which a computer can read. When the computer-readable media is configured as a database, it is to be understood that the database may be any type of database, such as relational, hierarchical, object-oriented, and/or the like. Accordingly, the invention is considered to include a tangible storage medium and prior art-recognized equivalents and successor media, in which the software implementations of the present invention are stored.

The terms "determine", "calculate", and "compute," and variations thereof, as used herein, are used interchangeably and include any type of methodology, process, mathematical operation or technique.

The term "module" as used herein refers to any known or later developed hardware, software, firmware, artificial intelligence, fuzzy logic, or combination of hardware and software that is capable of performing the functionality associated with that element. Also, while the invention is described in terms of exemplary embodiments, it should be appreciated that individual aspects of the invention can be separately claimed.

### BRIEF DESCRIPTION OF THE DRAWINGS

The present disclosure is described in conjunction with the appended figures:
Fig. 1 depicts a first communication system configuration in accordance with embodiments of the present invention;
Fig. 2A is a block diagram depicting a credential in accordance with embodiments of the present invention;
Fig. 2B is a block diagram depicting details of a mobile access device in accordance with embodiments of the present invention;
Fig. 3 is a block diagram depicting a first data structure employed in accordance with at least some embodiments of the present invention;
Fig. 4 is a block diagram depicting a second data structure employed in accordance with at least some embodiments of the present invention;
Fig. 5 is a block diagram depicting a second data structure employed in accordance with at least some embodiments of the present invention;
Fig. 6 is a block diagram depicting a second data structure employed in accordance with at least some embodiments of the present invention;
Fig. 7 is a flow chart depicting details of at least one embodiment in accordance with embodiments of the present invention;
Fig. 8 is a flow chart depicting details of at least one embodiment in accordance with embodiments of the present invention;
Fig. 9 is a flow chart depicting details of at least one embodiment in accordance with embodiments of the present invention; and
Fig. 10 is a flow chart depicting details of at least one embodiment in accordance with embodiments of the present invention.

### DETAILED DESCRIPTION

### COPYRIGHT AND LEGAL NOTICES

A portion of the disclosure of this patent document contains material which is subject to copyright protection. The copyright owner has no objection to the facsimile reproduction by anyone of the patent document or the patent disclosure, as it appears in the Patent and Trademark Office patent files or records, but otherwise reserves all copyrights whatsoever.

The ensuing description provides embodiments only, and is not intended to limit the scope, applicability, or configuration of the claims. Rather, the ensuing description will provide those skilled in the art with an enabling description for implementing the embodiments. It being understood that various changes may be made in the function and arrangement of elements without departing from the spirit and scope of the appended claims.

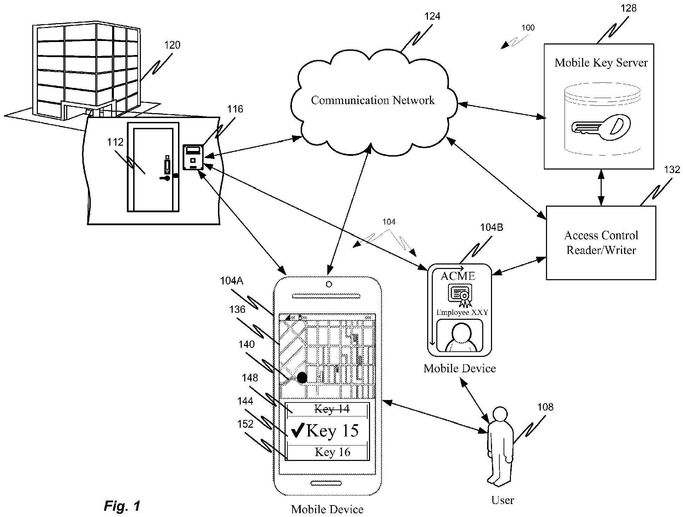

Referring initially to Fig. 1, details of a communication system 100 are depicted in accordance with at least some embodiments of the present disclosure. The communication system 100 generally includes one or more users 108, one or more mobile devices 104, one or more access control readers 116, and one or more communication networks 124. In most cases, the mobile device 104 may receive one or more access control keys from a mobile key server, such as mobile key server 128, utilizing a communication network 124. An access control key may comprise an electronic encryption key or password and is generally associated with an access control system protecting one or more assets. In addition to receiving one or more access control keys from the mobile key server 128, the mobile device 104 may also receive sequence data comprising indications as to when and/or where an access control key is valid and whether the access control key depends on the use of another access control key. Upon receiving, at a mobile device 104, the necessary access control keys and the necessary sequence data from the mobile key server 128, a user 108 may then utilize the access control keys residing on the mobile device 104 to access one or more protected assets.

Generally, an asset that a user 108 is attempting to access is protected by an access control reader, such as an access control reader 116, and requires a valid access control key to gain access to the asset. Upon a specific access control key becoming valid, the user 108 may present the access control key to an access control reader 116 utilizing the mobile device 104. Upon successful authorization, the access control reader 116 may then allow the user 108 access to the protected asset. For example, and as illustrated in Figure 1, an access control reader 116 may protect a structure or building 120 by limiting access through doorway 112. Upon presenting a valid access control key to the access control reader 116, the access control reader 116 may cause the door to become unlocked and allow a user 108 entry into the structure or building 120.

Alternatively, or in addition, an asset that the user 108 may be attempting to gain access to may reside on the mobile device 104, for example, a passcode, password, key code, etc. Once the access control key is valid, the user 108 may access the passcode, password, and/or key code and thereby utilize the passcode, password, and/or key code to gain access to another protected asset, such as a structure or building 120. For example, as an access control key becomes valid according to sequence data, a four digit passcode may be presented, or displayed, to the user 108 on a user interface 136 associated with the mobile device 104. The user 108 may then enter the displayed passcode into a pin pad associated with an access control reader 116 for authorization to gain access to structure or building 120; upon entering a valid pass code, the access control reader 116 may cause the door 112 to become unlocked and allow the user 108 entry/access into structure or building 120.

Referring again to Figure 1, the mobile device 104 may be associated with a user 108 and may correspond to any type of known communication equipment or collection of communication equipment operatively associated with at least one communication module and antenna, or transceiver. The mobile device 104 may be any device for carrying out functions, instructions, and/or is used to complete transactions with an access control reader 116 in accordance with the present disclosure. Examples of a suitable mobile device 104 may include, but are not limited to, a personal computer, laptop, Personal Digital Assistant (PDA), cellular phone, smart phone, tablet, mobile computing device, GPS device, handheld radio, dedicated mobile device, or combinations thereof. In general, the mobile device 104 is capable of receiving one or more access control keys, storing the one or more access control keys, and later presenting one or more stored access control keys to a reader, such as an access control reader 116. Another example of a mobile device 104 is a smartphone 104A having data stored thereon allowing a user 108 access to an asset protected by an access control reader 116, for example, a structure or building 120 protected by the access control reader 116.

The mobile device 104 may optionally have a user interface 136 to allow a user 108 to interact with the mobile device 104. The user interface 136 may optionally have a map display area 140, a valid key display 144, a previous key display 148, and a next key display 152. The valid key display 144 provides a user 108 with an indication representative of an access control key or keys are currently valid. The previous key display 148 provides a user 108 with an indication representative of an access control key or keys that have been previously used or utilized. The next key display 152 provides a user 108 with an indication representative of the control key or keys in a sequence that may be valid in the future.

Alternatively, or in addition, the mobile device 104 may comprise a mobile device 104B such as a Radio Frequency Identification (RFID) card (e.g., operating at 13.56 MHz and/or 125 kHz), an Integrated Circuit (IC) card, a smart card, a key fob, a passport, a credit card, a debit card, a PDA, a tag, a Near Field Communications (NFC) enabled mobile communication device, a portable computer, and the like. As such, the mobile device 104B may be a portable device that is used to complete transactions with an access control reader 116. An example of a mobile device 104B is an RFID smartcard having data stored thereon allowing a user 108 access to an asset protected by a reader 116, for example, a structure or building 120 protected by the access control reader 116.

The mobile device 104 may communicate with a mobile key server 128 utilizing a communication network 124 to receive access control keys and/or update the mobile key server 128 with a status. Alternatively, or in addition, the mobile device 104 may communicate with a mobile key server 128 utilizing an access control reader/writer 132. The mobile key server 128 may comprise the necessary hardware and/or software to manage and distribute access control keys amongst one or more mobile devices, for example mobile device 104. Further, the mobile key server 128 may also manage and distribute access control key sequence data; the access control key sequence data indicating where and/or when an access control key is valid and whether the access control key depends on another previously used access control key. In some embodiments, and consistent with the present disclosure, the mobile serve 128 may be a mobile device capable of managing and distributing access control keys and access control key sequence data.

In the context of a planned route scenario, the mobile key server 128 may receive one or more planned routes in which a user 108 is planning to utilize. Based on the planned route, mobile key server 128 may then determine appropriate sequence data such that valid access control keys can be used or utilized, by the user 108 using a mobile device 104, according to the planned route. Once the mobile key server 128 has determined appropriate sequence data, the sequence data may be sent to a mobile device 104 via a communication network 124 and/or an access control reader/writer 132. Alternatively, or in addition, mobile key server 128 may send one or more access control keys in addition to sending the determined sequencing data.

Alternatively, or in addition, an access control key may be sent to a mobile device 104 according to sequencing data. For example, the mobile key server 128 may cause one or more access control keys to be delivered to the mobile device 104. Once the access control key has been utilized, the mobile device 104 may send a message to the mobile key server 128 indicating that the access control key has been successfully utilized. The mobile key server 128 may then cause a next access control key to be delivered to the mobile device 104 according to a particular sequence, such as the determined sequence data, or according to a particular location of the mobile device 108. In such a configuration, the mobile device 108 would never have access to all access control keys simultaneously.

An example of a planned route is a series of one or more locations having an asset, such as structure or building 120, protected by an access control reader, such as access control reader 116. For instance, a user 108 may be part of a delivery, pickup, or transport service requiring the user 108 to access one or more structures or buildings 120. In some instances, the user 108 may be limited to accessing the structure or building 120 according to a predefined schedule, for example, after visiting a first asset and/or between 10:00 am and 10:15 am. Thus, assuming the user 108 requires access to multiple structures or buildings 120 as part of the planned route, a user 108 would require an access control key for each structure or building 120 that the user 108 will access. Therefore, as the access control keys are required to be presented according to a planned route where one access control key is accessed sequentially after another, the access control keys may be sequenced such that an access control key becomes valid based on the use of another access control key. Stated another way, an access control key may become valid after one or more access control keys have been utilized; for example an access control key may be utilized by having been presented to an access control reader 116 and/or utilized to access data residing on a mobile device 104.

In some embodiments and consistent with the present disclosure, the access control key may become valid according to one or more predetermined criteria. In such a scenario, an access control key may depend on one or more criteria or events prior to becoming valid. For example, as described above, an access control key may become valid once one or more other access control keys have been utilized. In such a scenario, a dependency is created; the access control key of interest depends on one or more other access control keys having been utilized. Additionally, an access control key may become valid according to a specific time and/or for a specific time duration. For example an access control key may become valid at 10:15 am for 20 minutes. As another example, an access control key may be valid between 10:15 am and 10:30 am. An access control key may become valid based on the location of the access control key being within a predetermined distance of a specified location or object. For example, an access control key may become valid within 100 meters of an asset. As another example, an access control key may become valid within 100 meters of another mobile device 104. As another example, an access control key may become valid after having passed within 100 meters of a particular location and/or another mobile device 104. Additionally, an access control key may become valid based on a combination of criteria. For example, an access control key may become valid after one or more access control keys have been utilized, the access control key becoming valid between 12:15 pm and 12:25 pm, and only after the mobile device 104 has passed within 150 meters of a particular building located halfway through a planned route.

In some embodiments and consistent with the present disclosure, mobile key server 128 may send the mobile keys and/or the sequenced data utilizing one or more communication networks. In accordance with at least some embodiments of the present disclosure, the communication network 124 may comprise any type of known communication medium or collection of communication media and may use any type of protocols to transport messages between endpoints. The communication network may include wired and/or wireless communication technologies. The Internet is an example of the communication network that constitutes an Internet Protocol (IP) network consisting of many computers, computing networks, and other communication devices located all over the world, which are connected through many telephone systems and other means. Other examples of the communication network include, without limitation, a standard Plain Old Telephone System (POTS), an Integrated Services Digital Network (ISDN), the Public Switched Telephone Network (PSTN), a Local Area Network (LAN), a Wide Area Network (WAN), a cellular network, and any other type of packet-switched or circuit-switched network known in the art. In addition, it can be appreciated that the communication network need not be limited to any one network type, and instead may be comprised of a number of different networks and/or network types.

Alternatively, or in addition, the mobile key server 128 may send sequence data and/or access control keys to an access control reader/writer, such as access control reader/writer 132. In these instances, mobile device 104 may receive access control key sequence data and/or access control keys from the access control reader/writer 132. For example, the user 108 may cause a communication to occur between mobile device 104 and the access control reader/writer 132. The access control reader/writer 132 may be any device capable of reading from or writing to a mobile device 104. The access control reader/writer 132 may then communicate with mobile device 104 over a communication medium using a variety of communication protocols; the access control reader/writer 132 may be contactless and/or contact-based. In one example, the mobile device 104 may communicate with the access control reader/writer 132 with RF signals, thereby allowing contactless communication. In other embodiments, mobile device 104 may be swiped, inserted, or otherwise contacted with the access control reader/writer 132. As such, the user 108 may initiate the communication by swiping mobile device 104 over a contactless access control reader/writer 132 and cause sequence data and/or one or more access control keys to be received.

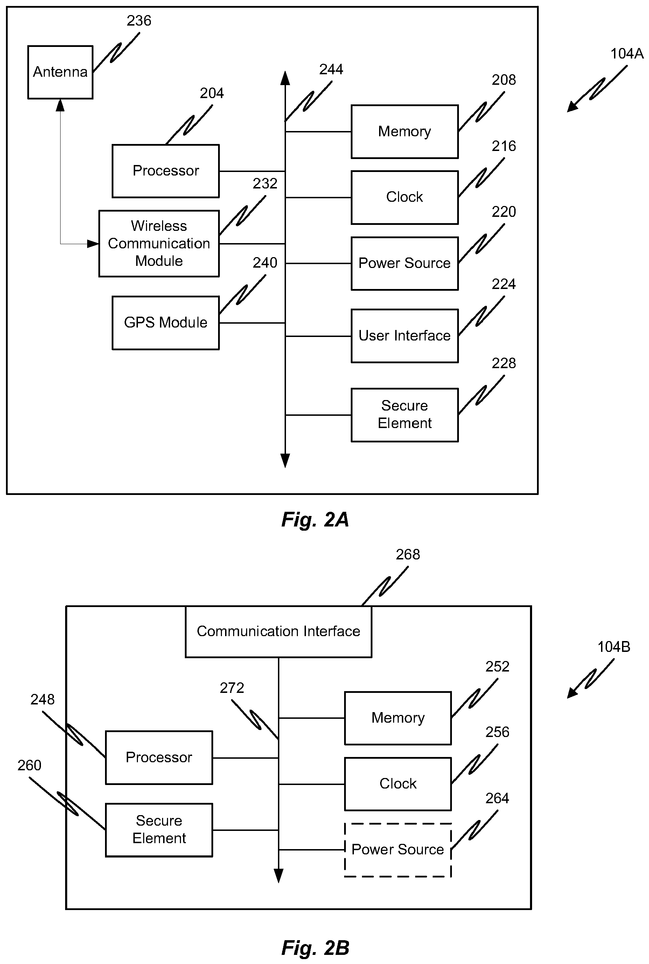

Referring now to Figure 2A, details of one or more mobile devices 104A are depicted in accordance with at least some embodiments of the present disclosure. Mobile device 104A may generally include a processor 204, memory 208, a clock 216, a power source 220, a user interface 224, a wireless communication module 232 and antenna 236, and a gps module 240. Processor 204 is provided to execute instructions contained within memory 208. Accordingly, the processor 204 may be implemented as any suitable type of microprocessor or similar type of processing chip, such as any general-purpose programmable processor, digital signal processor (DSP) or controller for executing application programming contained within memory 208. Alternatively, or in addition, the processor 204 and memory 208 may be replaced or augmented with an application specific integrated circuit (ASIC), a programmable logic device (PLD), or a field programmable gate array (FPGA).

The memory 208 generally comprises software routines facilitating, in operation, pre-determined functionality of the mobile device 104A. The memory 208 may be implemented using various types of electronic memory generally including at least one array of non-volatile memory cells (e.g., Erasable Programmable Read Only Memory (EPROM) cells or FLASH memory cells, etc.) The memory 208 may also include at least one array of dynamic random access memory (DRAM) cells. The content of the DRAM cells may be pre-programmed and write-protected thereafter, whereas other portions of the memory may selectively be modified or erased. The memory 208 may be used for either permanent data storage or temporary data storage.

The wireless communication module 232 may comprise a GSM, CDMA, FDMA and/or analog cellular telephony transceiver capable of supporting voice, multimedia and/or data transfers over a cellular network. Alternatively, or in addition, the wireless communications module 232 may comprise a Wi-Fi, BLUETOOTH TM, WiMax, infrared, NFC or other wireless communications link. The wireless communications module 232 may be associated with one or more shared or a dedicated antennas 236. The type of medium used by the mobile device 104A to communicate with other communication devices or servers 128 may depend upon the communication applications availability on the mobile device 104A and/or the availability of the communication medium.

The mobile device 104A may also include a satellite positioning system, or geographical location system, module/receiver 240 such as the Global Positioning System ("GPS") (US), GLONASS (Russia), Galileo positioning system (EU), Compass navigation system (China), and Regional Navigational Satellite System (India). In accordance with embodiments of the present invention, a GPS module may further provide absolute location information to other components of the mobile device 104A and/or communication system 100. In some embodiments, a geographical location of the mobile device 104A may be determined by the device's location-based features, a location signal, and/or combinations thereof. The location-based features, and corresponding module 240, may utilize data from one or more satellite positioning systems (e.g., GPS), WiFi access points, cell towers, and the like.

Additionally, the mobile device 104A may include a secure element 228; a secure element 228 may be a tamper-resistant platform (typically a one chip secure microcontroller) capable of securely hosting applications and their confidential and cryptographic data (e.g. key management) in accordance with the rules and security requirements set forth by a set of well-identified trusted authorities. The secure element 228 may be configured to securely store credentials, applications, and/or provide for the secure execution of associated applications. In some cases the secure element may reside in a smart card chip, a subscriber identity module ("SIM") card, secure application module ("SAM") card, a secure digital ("SD") card, a trusted platform module (TPM), a trusted Execution Environment, and/or other memory or platform configured as a secure environment.

The mobile device 104A may optionally include a user interface 224 allowing a user 108 to interact with mobile device 104A and the access control key presentment and management process. User interface 224 may be similar to the user interface 136 depicted in Figure 1. For example, interacting with user interface 224, a user 108 may be able to determine which access control key is currently valid utilizing the valid access control display 144. In another instance, user 108 may be able to determine which access control keys are currently invalid, have been disabled, or have been deleted using previous access control display 148. Alternatively, or in addition, a user 108 may be able to determine which access control keys may still be used in the future, by using the next access control key display 152. Furthermore, for each display 144, 148, and/or 152, a corresponding location on the map display area 140 may be provided. Additionally, map display area 140 may provide a user 108 with an indicating as to the route to be followed based on the received sequence data from mobile key server 128. In such an instance, a user 108 would have the option of displaying and configuring the displayed route in accordance with a user's 108 desires. Alternatively, or in addition, the recently used access control key may be reused depending on receive sequence data.

An access control key that has been utilized to gain access to an asset may become automatically disabled, deleted, and/or invalid based on the use. Alternatively, or in addition, a user 108 may have the option of providing such an indication utilizing user interface 104A. For example, after using an access control key, a user 108 may cause a menu to be displayed on user interface 224 thereby allowing the user 108 to indicate the recently used access control key was used. Based on sequence data, rules, and/or various other parameters, the recently used access control key may be displayed on user interface 224 as a previous access control and/or a next access control key. Such access control key use may also be communicated to mobile key server 128 utilizing wireless communication module 232.

Communications between various components of the mobile device 104A may be carried by one or more buses 244. Moreover, power can be supplied to the components of the mobile device 104A from a power source 220. The power source 220 may, for example, include a battery, an AC to DC converter, power control logic, and/or ports for interconnecting the mobile device 104A to an external source of power.

Referring now to Figure 2B, details of one or more mobile devices 104B are depicted in accordance with at least some embodiments of the present disclosure. Mobile device 104B may generally include memory 252, processor 248, and communication interface 268. The communication interface 268 may allow the mobile device 104B to communicate with a reader/writer. Processor 252 is provided to execute instructions contained within memory 252. Accordingly, the processor 252 may be similar to process 204and may be implemented as any suitable type of microprocessor or similar type of processing chip, such as any general-purpose programmable processor, digital signal processor (DSP) or controller for executing application programming contained within memory 252. Alternatively, or in addition, the processor 248 and memory 252 may be replaced or augmented with an application specific integrated circuit (ASIC), a programmable logic device (PLD), or a field programmable gate array (FPGA).

The memory 252 is generally similar to the memory 208 and may comprise software routines facilitating, in operation, pre-determined functionality of the mobile device 104B. The memory 252 may be implemented using various types of electronic memory generally including at least one array of non-volatile memory cells (e.g., Erasable Programmable Read Only Memory (EPROM) cells or FLASH memory cells, etc.) The memory 252 may also include at least one array of dynamic random access memory (DRAM) cells. The content of the DRAM cells may be pre-programmed and write-protected thereafter, whereas other portions of the memory may selectively be modified or erased. Memory 252 may be used for either permanent data storage or temporary data storage.

Also included in mobile device 104B is an optional power source 264, such as a battery, for providing power to the mobile device 104B. Alternatively, or in addition, power source 220 is omitted, with the necessary power being provided from the communication interface 268.

Additionally, the mobile device 104B may include a secure element 260; a secure element 260, similar to secure element 228, may be a tamper-resistant platform (typically a one chip secure microcontroller) capable of securely hosting applications and their confidential and cryptographic data (e.g. key management) in accordance with the rules and security requirements set forth by a set of well-identified trusted authorities. The secure element 260 may be configured to securely store credentials, applications, and/or provide for the secure execution of associated applications. In some cases the secure element may reside in a smart card chip, a subscriber identity module ("SIM") card, secure application module ("SAM") card, a secure digital ("SD") card, or other memory configured in a secure environment.

The mobile device 104B may automatically disable, delete, or invalidate an access control key that has been utilized to gain access to an asset. For example, a user 108 may utilize an access control key residing on mobile device 104B to gain access to a building 120. Based on sequence data, rules, and/or various other parameters, the recently used access control key may be disabled, deleted, or invalidated. Alternatively, or in addition, the recently used access control key may be reused depending on receive sequence data.

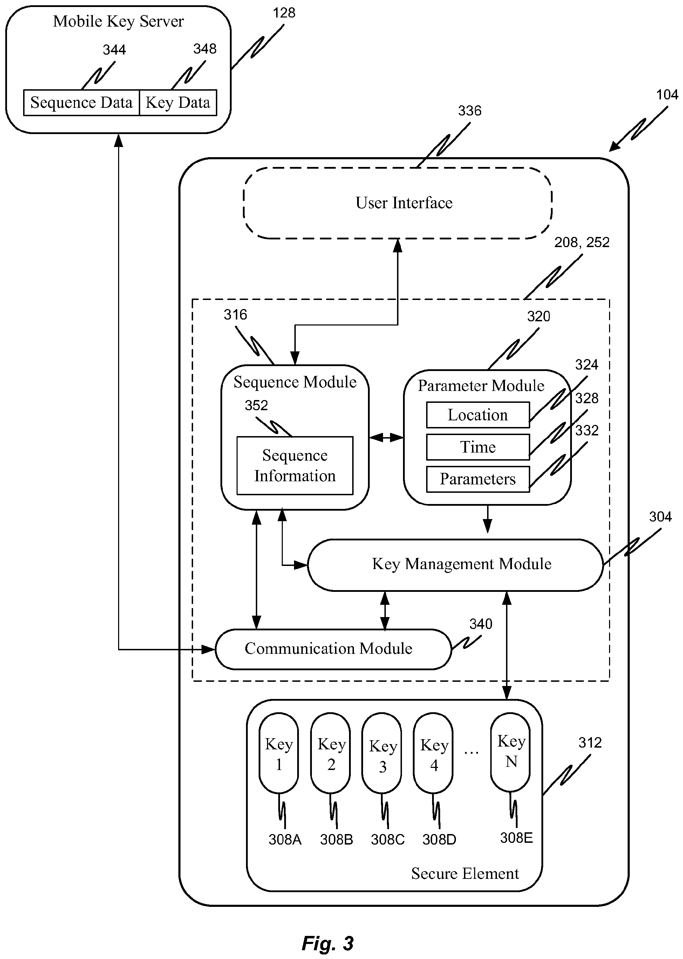

Referring now to Figure 3, details of one or more mobile devices 104 and one or more mobile key servers 128 are depicted in accordance with at least some embodiments of the present disclosure. The mobile key server 128, as previously discussed, may manage sequence data 344 and access control key data 348. Sequence data may comprise information relating to a sequence in which one or more keys are to be valid, such as when and/or where an access control key is valid. For example, if a user 108 was planning on following a route that includes presenting an access control key at access control reader A at location A, then presenting an access control key at access control reader D at location D, and finally presenting an access control key at access control reader C at location C, then sequence data 344 may comprise information indicating that the access control keys should be presented in the following order: the access control key for access control reader A at location A; the access control key for access control reader D at location D; and finally, the access control key for access control reader C at location C. In some embodiments and consistent with the present disclosure, the access control key for access control reader D at location D will only be valid once the access control key for an access control reader A at location A has been utilized. The sequence data 344 may be sent from the mobile key server 128 and received at the mobile device 104. For example, the sequence data 344 may be received by the communication module 340 at the mobile device 104. The sequence data 344 sent from the mobile key server 128 may be encrypted prior to transmission and may be decrypted after receipt.

The key data 348 may comprise the actual access control keys to be used or utilized at various access control readers 116. For example, the key data 348 may contain one or more access control keys, in any order, and may be sent from the mobile key server 128 and received at the mobile device 104; the key data 348 may be received by the communication module 340 at the mobile device 104. The key data 348 sent from the mobile key server 128 may be encrypted prior to transmission and may be decrypted after receipt.

The sequence data 344 and the key data 348 do not have to be sent from the mobile key server 128 at the same time. Likewise, the sequence data 344 and the key data 348 do not have to be received at the mobile device 104 at the same time. Additionally, one or more key data 348 or sequence data 344 may be sent from the mobile key server 128 and received at the mobile device 104. For example, if a user 108 was planning on following a route that includes presenting one or more access control keys to access control readers A, D, and C, as above, mobile key server 128 may send access control keys 348 for access control readers A and C at the same time. Then, at a later time, mobile key server 128 may send the access control key for access control reader D. Mobile key server 128 may send sequence data 344 indicating that that access control keys for access control reader A, D, and C should be presented in that order. Alternatively, or in addition, the mobile key server 128 may send sequence data 344 indicating that that access control keys for access control reader A and C should be presented in that order. At a later time, mobile key server 128 may then send sequence data 344 indicating that the access control key for access control reader D should be presented or utilized after the access control key for access control reader A has been presented and/or utilized and before the access control key for access control reader C has been presented and/or utilized. Thus, the second sequence data 344 effectively updates the sequence data residing on mobile device 104.

Referring again to Figure 3, as previously discussed, mobile device 104 generally includes a communication module 340, a memory 208, 252, a secure element 312 and optionally a user interface 336. The communication module 340, the memory 208,252, the secure element 312, and the optional user interface 336, are the same or similar to those previously discussed in Figures 2A and 2B; therefore, the description will not be repeated. The mobile device 108 may also include a key management module 304, a sequence module 316, and parameter module 320. Although illustrated as separate module, as one of ordinary skill in the art can appreciate, each module may be combined into a single module. Key management module 304 may be responsible for requesting one or more keys 308 from the mobile server 104, managing the order of keys 308, determining whether the keys 308 are valid, and further causing a message to be sent to the mobile key server 104 indicating a valid use of one or more keys 308 has occured. Stated another, the key management module 304 may be tasked with storing and retrieving the access control keys 308. The access control keys 308 may be stored and/or retrieved in an order indicated by the sequence data 344 and/or directed by the sequence module 316.

The sequence module 316 may be responsible for maintaining sequence information 352 according to the sequence data 344 received from mobile server 128. The sequence module 316 may store, add, change, update, delete, remove, and or disable sequence information 352 according to the sequence data 344 received from the mobile server 128. The sequence module 316 may also communicate with the key management module 304. For example, the sequence module 316 may cause the key management module 304 to present a particular access control key, for example key 308B, at the next communication session that occurs between the mobile device 104 and an access control reader 116. Alternatively, or in addition, the sequence module 352 may inform the key management module 304 as to the order in which the access control keys 308A, 308B, 308C, 308D, and 308E are to be ordered and presented. Therefore, upon the occurrence of the next communication session between the mobile device 104 and the access control reader 116, the key management module 304 will present the next access control key 308 in the order specified by the sequence module 316. Alternatively, or in addition, upon the next communication between the mobile device 104 and the access control reader 116, the sequence module 316 may communicate with the key management module 304 and cause an access control key, for example 308D, to be presented. As previously discussed, the access control key may be presented or provided to the access control reader 116 via a communication module 340 and/or a communication interface 268.

The mobile device 104 may also include a parameter module 320. The parameter module 320 may provide the sequence module 316 and/or the key management module 304 one or more parameters to be used to determine the validity of an access control key 308. For example, the parameter module 320 may include a location parameter 324, a time parameter 328, and other parameters 332 that may be compared to additional criteria information included in the sequence data 344 and/or the sequence information 352. As one example, suppose the sequence data 344 indicates one or more access control keys are valid for a duration of 20 minutes after first becoming valid. Based on the received sequence data 344, the sequence module 316 may then create the necessary dependency information, for example an access control key 308B becomes valid for use at a particular access control reader 116 after an access control key 308A has been used. Upon access control key 308B becoming valid, the key management module 312 stores an indication, such as a timestamp, and associates this indication with access control key 308B. Before or during the next communication session between the mobile device 104 and an access control reader 116, parameter module 320 may pass a time parameter 328 to the key management module 312. The time parameter 328 may correspond to the current time as seen by the mobile device 104. The key management module 304 may then compare the time parameter 328 to the timestamp associated with access control key 308B to determine if the access control key 308B is still a valid key. If more than 20 minutes has passed since the access control key 308B has become valid, the key management module 304 may disable, invalidate, and/or delete the access control key 308B.

As another example, suppose the sequence data 344 indicates one or more access control keys can be valid only between the hours of 8:00 am and 5:30 pm; this information, or criteria, may be stored as sequence information 352, stored by the key management module 304, and/or associated with the one or more access control keys in some manner. Based on the received sequence data 344, the sequence module 316 may then create the necessary dependency information, for example an access control key 308D becomes valid for use at a particular access control reader 116 after an access control key 308B has been used. Before or during the next communication session between the mobile device 104 and an access control reader 116, parameter module 320 may pass a time parameter 328 to the sequence module 316 and/or the key management module 312. The time parameter 328 may correspond to the current time as seen by the mobile device 104. The sequence module 316 and/or the key management module 304 may then compare the time parameter 328 to the additional criteria associated with the access control keys to determine if the access control keys are still valid. If the current time is 6:00 pm, the sequence module 316 and/or the key management module 304 may disable, invalidate, and/or delete the access control keys having this additional criteria.

As another example, suppose the sequence data 344 indicates a particular access control key 308C becomes valid only after mobile device 104 passes within 100 meters of a specific location, for example location C; this information, or criteria, may be stored as sequence information 352, stored by the key management module 304, and/or associated with access control key 308C in some manner. This information may also comprise one or more GPS locations, coordinates, or otherwise that indicate a valid location criteria. Based on the received sequence data 344, the sequence module 316 may then create the necessary dependency information, for example an access control key 308C becomes valid for use at a particular access control reader 116 after an access control key 308A and access control key 308B have been used. Parameter module 320 may pass a location parameter 324 indicating a current location of mobile device 104. Again, this location information may comprise one or more gps locations, coordinates, or otherwise that provide the location of the mobile device 105. The sequence module 316 and/or the key management module 312 may then compare the location parameter 324 to the additional criteria associated with the access control key 308C to determine if the additional criteria has been fulfilled, for example, mobile device 104 passing within 100 meters of location C. Assuming this criteria has been met, sequence module 352 and/or key management module 304 may indicate that this criteria has been met such that access control key 308C may become valid in accordance with the dependency information created by sequence module 352. If, for example, the necessary dependency information has been met, such as access control key 308A and access control key 308B having been used, but the additional location criteria has not been satisfied, the access control key 308C will not become valid.

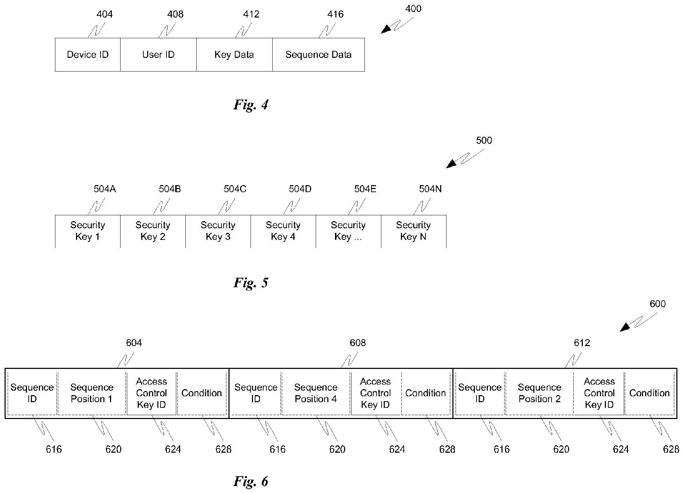

With reference now to Fig. 4, an example data structure 400 used in connection with sending and receiving sequence data 344 and key data 412 will be described in accordance with at least some embodiments of the present invention. The data structure 400 may be utilized by any mobile key server 128 and/or any mobile device 104. The data structure 400 may include a number of fields related to the mobile device 104 and the user 108 of the mobile device 104. By way of a non-limiting example, the data structure 400 may include a device identification field 404, a user identification field 408, a key data field 412, and a sequence data field 416.

The device identification field 404 may include information that is used to identify the communication device 104 when sending or receiving a data structure 400. This information may be used to identify the device using any unique information or combination of unique information. For example, a device id 404 may correspond or be associated with a mobile device's electronic serial number (ESN), a Machine Access Control (MAC) address, an Internet Protocol (IP) address, any other address or phone number associated with the mobile device, or combinations thereof. The user identification field 408 may include information that is used to identify the user 108 of a communication device 104 when sending or receiving a data structure 400. This information may be used to identify the user 108 and may include any unique information or combination of unique information that are specific to the user 108. For example, the user id field 408 may include an account user name, a user name, a user number, a unique number associated with a user's identification, or similar information uniquely identifying a user, including combinations therefore. The key data field 412 may include access control keys and will be explained in connection with Figure 5. The sequence data field 416 may include access control key sequence information 416 and will be explained in connection with Figure 6. Although data structure 400 is illustrated as having four fields, data structure 400 may have fewer or additional fields than that which is illustrated. For example, data structure 400 may only include a device id field 404 and a key data field 412. As another example, data structure 400 may include a device id field 404 and a sequence data field 416 in one transmission, and may later include a device id field 404, a key data field 412, and a sequence data field 416 in a later transmission.

With reference now to Figure 6, an example data structure 500 used in connection with sending and receiving key data 412, 348 will be described in accordance with at least some embodiments of the present invention. The data structure 500 may be utilized by any mobile key server 128 and/or any mobile device 104. The data structure 500 may include a number of fields relating to security keys, or access control keys, that are to be sent from a mobile key server 128 to a mobile device 104. Key data field 412 may include data structure 500. Data structure 500 may include one or more access control keys. For example, data structure 500 may include access control keys 504A-N. Although access control keys 504A-N are depicted in order (e.g. key 1, key 2, key 3, key4), the access control keys are not required to be transmitted in any order. Alternatively, or in addition, the access control keys may be ordered in such a way as to correspond to a particular sequence.

With reference now to Figure 6, an example data structure 600 used in connection with sending and receiving sequence data 416, 344 will be described in accordance with at least some embodiments of the present invention. The data structure 600 may be utilized by any mobile key server 128 and/or any mobile device 104. The data structure 600 may include a number of fields relating to sequence data 344. Each sequence data (i.e. 604, 608, 612), may optionally include one or more related sequence information, such as a sequence id 616, sequence position 620, a access control key id 624, and one or more conditions or criteria 628. By way of a non-limiting example, sequence data 604 is depicted as including a sequence id field 616. The sequence id field 616 may identify a specific sequence id associated with one or more routes or courses. For example, a sequence id field 616 may indicate that data in the sequence data 604 is associated with route ABC. A sequence id field in the sequence data field 608 may indicate that data in the sequence data field 608 is associated with route LMN. Alternatively, or in addition, the sequence id field 616 may correspond to a day of the week, time of day, or other such identifiers that distinguish one sequence of access control keys from another.

The sequence position field 620 indicates a sequential position, of an access control key identified by access control key id field 624, within a sequence of one or more access control keys. For example, if the sequence position field 620 of sequence data 604 has a value of 1, the first access control key to be presented in a sequence, (corresponding to a route or course) will be identified by the access control key id field 624 in sequence data 604. As another example, if the sequence position field 620 of sequence data 612 has a value of 2, the second access control key to be presented in a sequence, (corresponding to the route or course) will be identified by the access control key id field 624 in sequence data 612. As another example, if the sequence position field 620 of sequence data 608 has a value of 4, the fourth access control key to be presented in a sequence, (corresponding to the route or course) will be identified by the access control key id field 624 in sequence data 608.

The condition field 628 provides an indication as to whether or not the access control key identified in access control key id field 624 must meet a certain condition or criteria prior to becoming active or valid. For example, and as previously described, the access control key identified in access control key id field 624 may depend on the utilization or use of another access control key. Therefore, sequence data 604 may include this criteria in the condition field 628. Alternatively, or in addition, condition field 628 may include criteria including, but not limited to, location and time criteria as previously discussed. Sequence information 352 may also utilize data structure 600 when storing and managing sequence information.

Although illustrated in Figure 4 as including sequence data 416 in addition to key data 412, it is contemplated that not all sequence data fields as discussed in Figure 6 are required for access control key sequencing. For example, no sequencing data 416 may be necessary; instead, the necessary sequencing of access control keys may be determined directly from the order in which the access control keys are sent the from mobile key server 128 and/or received at the mobile device 104. Thus, the sequence in which access control keys are presented may be implicitly derived.

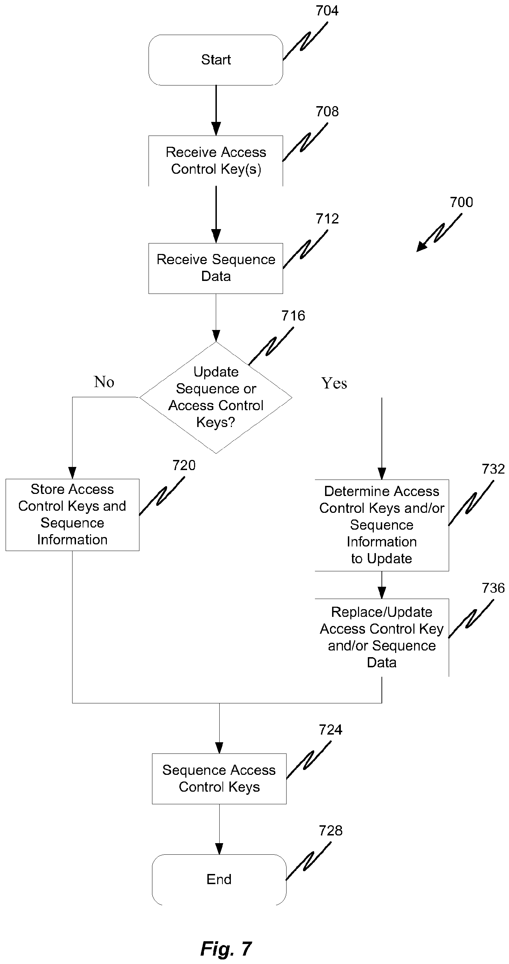

A method of sequencing one or more access control keys, in accordance with an embodiment of the present disclosure, will now be described in connection with Fig. 7. Method 700 is in embodiments performed by a device, such as device 104. More specifically, one or more hardware and software components may be involved in performing method 700. In one embodiment, one or more of the previously described modules perform one or more of the steps of method 700. The method 700 may be executed as a set of computer-executable instructions executed by a computer system and encoded or stored on a computer-readable medium. Hereinafter, the method 700 shall be explained with reference to the systems, components, modules, software, etc. described in conjunction with Figs. 1-6.

Method 700 may continuously flow in a loop, flow according to a timed event, or flow according to a change in an operating or status parameter. Method 700 is initiated at step 704. Step 704 may start with a mobile device 104 communicating with a mobile key server 128. For example, mobile device 104 may indicate to mobile server 128 that it requires and is ready to download access control key data 348 and/or sequence data 344. The access control keys and sequence data may be associated with a particular route or course in which a user 108 associated with mobile device 128 may be following. At step 708, key data 348, 412 is received at mobile device 104. The key data 348, 412 may arrive at mobile device 104 in the form of a data structure 400 and/or data structure 500. The access control keys 348, 504 may be downloaded and stored by the key management module 304 to the secure element 312. For example, access control keys 308A-E are stored to the secure element 312.

At step 712, sequence data 344, 416, if any, is received at mobile device 104. The sequence data 344, 416 may arrive at mobile device 104 in the form of a data structure 400 and/or data structure 600. The sequence data 344, 416 may be downloaded and stored to the sequence module 316 and may be utilized as sequence information 352. At step 716, sequence module 316 and/or key management module 304 determines, based on the received access control key(s) and/or the received sequence data, whether an update is required to the sequence of access control keys and/or the access control keys themselves. For example, if a route or course is changed after the sequence of access control keys and sequence data for the route or course has already been received at the mobile device 104, mobile device 104 may request or mobile server 128 may send an updated access control key and/or updated sequence data. If the sequence module 316 and/or the key management module 304 determine that an update to the access control key(s) and/or the sequence data is required, the method proceeds to step 732.

The sequence module 316 and/or the key management module 304 may determine whether or not an update is needed based on the received access control key(s) and/or the received sequence data. For example, if the sequence module 316 receives sequence data 344, 416 having a single sequence data 604, the sequence module 316 may check the sequence information 352 to determine if the sequence position 620, and optionally the sequence id 616, match sequence information 352 that has already been received. If there is a match, sequence module 316 may determine that the sequence information 352 requires and update. Alternatively, or in addition, key management module 304 may receive access control key data 348, 412 with one or more access control keys. The key management module 304 may check the stored access control keys (308) to determine whether or not any of the stored access control keys (308) match the newly received access control key. If there is a match, key management module 304 may determine that the access control keys require and update.

If the sequence module 316 and/or the key management module 304 determine that an update to the access control key(s) and/or the sequence data is not required, the method proceeds to step 720. For example, if this is the first time mobile device 104 receives the access control keys and the sequence data, an update would not be required. At step 720, the access control key data 348, 412 is stored as access control keys 308; the sequence data 344, 416, if any, is stored as sequence information 352. The method then transitions to step 724 where the access control keys 304 may be sequenced.

At step 724, the key management module 304 and/or the sequence module 316 may sequence the access control keys 308. The sequencing may occur in a variety of multiple ways. For example, the key management module 304 may communicate with the sequence module 316 to determine an order, based on the sequence information 352, as to how the access control keys 308 should be ordered. The key management module 304 may then proceed to order the access control keys 308 in accordance with the ordered sequence information 352. For example, if an access control key 308B is accessed prior to an access control key 308A according to the sequence information 352, then the access control key 308B may be ordered before access control key 308A. Alternatively, or in addition, no sequence data 344, 412 may have been received. In such an instance, key management module 304 may determine that the order upon which the access control keys 308 were received is the order in which they are to be sequenced. Moreover, without any explicit sequence data or sequence information, the key management module 304 may determine that the order in which the keys are sequenced is also the order in which the access control keys may depend on one another. For example, if access control key 308A , 308B, and 308C are stored in this order, then the key management module 304 may determine that access control key 308B depends on access control key 308A. Additionally, the key management module 304 may determine that the access control key 308C depends on access control key 308 B. Alternatively, or in addition, the access control keys 308 remain as they are stored within key management module 304. Instead of the access control keys actually being rearranged in an order in which they are to be used and/or depend, the sequence information 352 is used to choose the "next access control key" according to the data contained therein. Once the sequencing of access control keys completes, the method ends at step 728.

If the sequence module 316 and/or the key management module 304 determine that an update is to occur at step 716, then the method passes to step 732, where the module 316 and/or the key management module 304 determine which access control key(s) and what sequence information should be updated. For example, if the sequence module 316 receives sequence data 344, 416 having single sequence data 604, the sequence module 316 may check the sequence information 352 to determine if the sequence position 620, and optionally the sequence id 616, match sequence information 352 that has already been received. If there is a match, sequence module 316 may determine that this identified sequence information 352 requires updating; the sequence information 352 is replaced, updated, and/or changed in accordance with the received sequence data 344, 416 at step 736. Alternatively, or in addition, key management module 304 may receive access control key data 348, 412 with one or more access control keys. The key management module 304 may check the stored access control keys (308) to determine whether or not any of the stored access control keys (308) match the newly received access control key. The access control keys may match based on key location and/or a key sequence information. If there is a match, key management module 304 may determine that the identified access control requires the update and will replace, update, or change the access control key at step 736. After the sequence information and/or access control keys have been updated, method 700 passes to step 724.

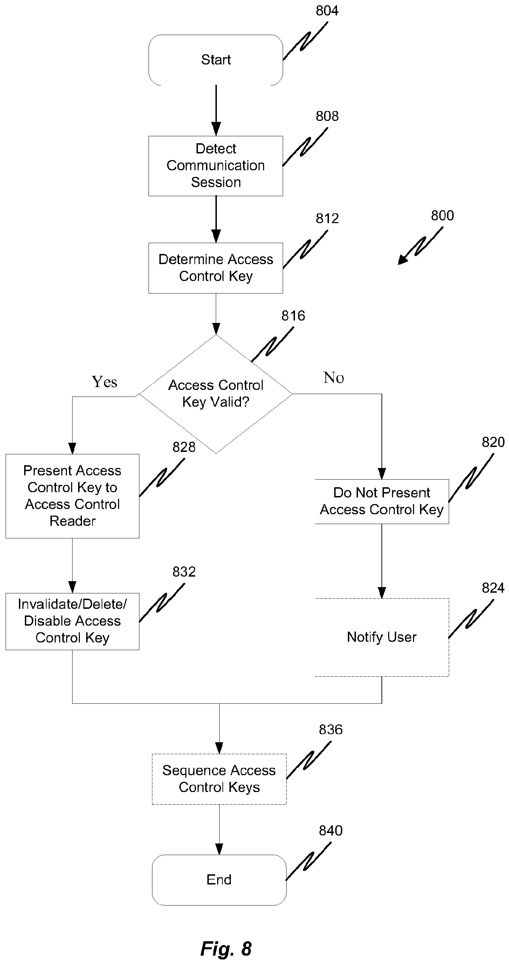

A method of presenting one or more access control keys to an access control reader, in accordance with an embodiment of the present disclosure, will now be described in connection with Fig. 8. Method 800 is in embodiments performed by a device, such as device 104. More specifically, one or more hardware and software components may be involved in performing method 800. In one embodiment, one or more of the previously described modules perform one or more of the steps of method 800. The method 800 may be executed as a set of computer-executable instructions executed by a computer system and encoded or stored on a computer-readable medium. Hereinafter, the method 800 shall be explained with reference to the systems, components, modules, software, etc. described in conjunction with Figs. 1-6.

Method 800 may continuously flow in a loop, flow according to a timed event, or flow according to a change in an operating or status parameter. Method 800 is initiated at step 804. At step 808, the mobile device 104 may detect a communication session with an access control reader 116. Upon detecting this communication session, method 800 may proceed to step 812 where the "next access control key" to be presented to the access control reader 116 may be determined.

At step 812, the next access control key may be determined in a variety of ways. For example, sequence module 316 may determine the lowest sequence position 620 of all sequence data remaining in sequence information 352 (i.e. 604, 608, 612 etc.) for a specific sequence id 616. Upon locating the lowest sequence position 620, sequence module 316 may determine which access control key 308 is to be presented to the access control reader 116. For example, if sequence position 1 of sequence data 604 is determined to be the lowest sequence position, sequence module 316 may determine which access control key is the access control key to be presented based on the value in the access control key id field 624. Alternatively, or in addition, the location of mobile device 104 may help determine the next access control key. For example, if mobile device 104 is within 100 meters of an access control reader 116 at location E, the next access control key may be the access control key associated with location E.

Next, in step 816, sequence module 316 may determine if the next access control key is valid. An access control key will not be valid if outstanding criteria or conditions have not been met. Outstanding conditions may include those conditions or criteria previously discussed such as access control key dependency, location and time. For example, if the condition field 628 indicates that another access control key is required to have been utilized or used prior to the determined next access control key being presented to reader 116, the method 800 may proceed to step 820, where the access control key is determined not to be valid and is not presented to the access control reader 116; the user 108 is the optionally notified in step 824. For example, at step 824, the user may be presented with an indication on the user interface 136, 224 informing the user 108 that a prior access control key has not been utilized. Alternatively, or in addition, upon determining that one or more criteria still are required to be satisfied, mobile device 104 may send a transmission or message to mobile key server 128. Such a message may inform mobile server 128 of the issue such that it may be logged and/or later resolved. Of course, where a mobile device 104 is implemented that does not have a user interface, the mobile device 104 does not present the user with a notification indicating that the access control key has not been validated.

If at step 816, there are no outstanding criteria or conditions that need to be satisfied prior to presenting the access control key to the access control reader 116, the access control key becomes valid whereby method 800 proceeds to step 828. At step 828, the valid access control key is presented to the access control reader 116 such that a user 108 can gain access to a protected asset, structure or building 120. Upon successful authorization with access control reader 116, the method 800 proceeds to step 832, where the access control key may be automatically deactivated, invalidated, deleted, or disabled. For example, if the access control key appears later in the sequence of access control keys, instead of deleting the access control key from the secure element, the key management module 304 may simply invalidate the access control key such that conditions or criteria of sequence data 604, 608, 612 pertaining to the reused key may be later satisfied. Alternatively, or in addition, the sequence data 604, 608, 612 associated with the recently used access control key may be deleted.

In some embodiments, a user 108 may provide an indication via user interface 136, 224 that the access control key presented to the access control reader 116 was successful. In such an instance, the user 108 may indicate that the recently used key was used and should now be disabled, deleted, invalidated, or deactivated.

Alternatively, or in addition, at step 812, the key management module 304 may determine the next ordered access control key to be presented. As the access control keys 308 may be stored in the order in which they are to be utilized, the next access control key may be the next access control key in the ordered sequence. Similarly, at step 816, the key management module 304 may determine that the previous access control key had not been utilized. Such a determination may be based on the one or more previous access control keys not having been invalidated, disabled, or deleted for example. Upon such a determination, the method 800 would proceed to step 820.

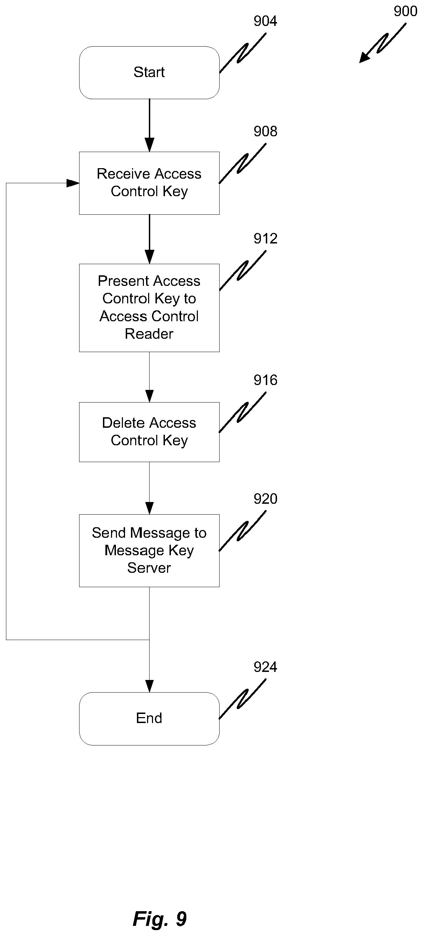

A method of receiving one or more access control keys and presenting the one or more access control keys to a mobile key server, in accordance with an embodiment of the present disclosure, will now be described in connection with Fig. 9. Method 900 is in embodiments performed by a device, such as device 104. More specifically, one or more hardware and software components may be involved in performing method 900. In one embodiment, one or more of the previously described modules perform one or more of the steps of method 900. The method 900 may be executed as a set of computer-executable instructions executed by a computer system and encoded or stored on a computer-readable medium. Hereinafter, the method 900 shall be explained with reference to the systems, components, modules, software, etc. described in conjunction with Figs. 1-6.

Method 900 may continuously flow in a loop, flow according to a timed event, or flow according to a change in an operating or status parameter. Method 900 is initiated at step 904. Step 904 may start with a mobile device 104 communicating with a mobile key server 128. For example, mobile device 104 may indicate to mobile server 128 that it requires and is ready to download an access control key 308. The access control may be associated with a particular route or course maintained at the mobile key server 128. At step 908, key data 348 is received at mobile device 104. The key data 348 may arrive at mobile device 104 in the form of a data structure 400 and/or data structure 500. The access control key 308, 504 may be downloaded and stored to the secure element 312. For example, access control key 308A is stored to the secure element 312 by the key management module 304. At step 912, the access control key is presented to the access control reader 116 such that a user 108 can gain access to a protected asset, structure or building 120. Upon successful authorization with access control reader 116, the method 900 proceeds to step 916 where the key management module 304 may delete the recently used access control key from the secure element 312. Upon deleting the access control key, the method proceeds to step 920 where the mobile device sends or transmits a message to the mobile key server 128 informing the mobile key server 128 that the access control key was successfully used. If another location or asset exists on user's 108 route or course, mobile device 104 may request the next key from the mobile key server 128. Otherwise, the method 900 ends at step 924.

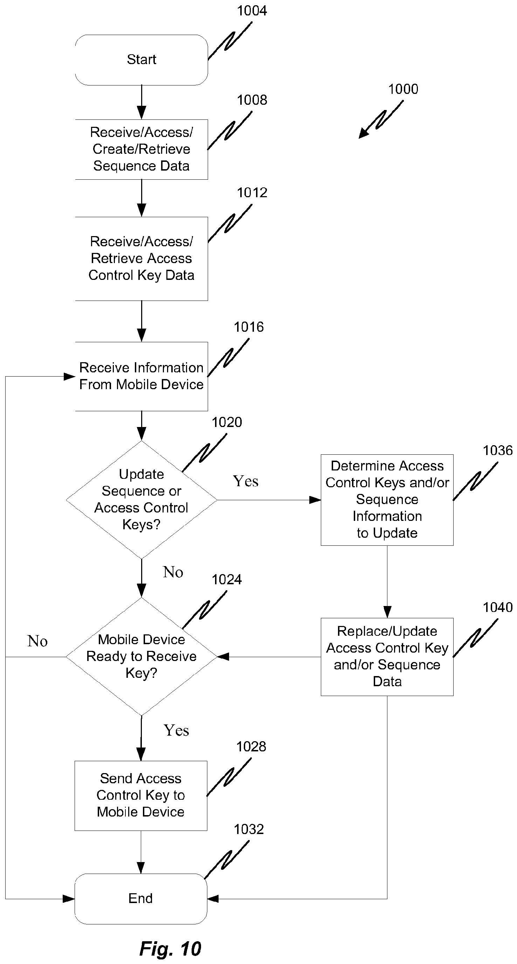

A method of sending or delivering one or more access control keys from a mobile key server 128 to a mobile device 104, in accordance with an embodiment of the present disclosure, will now be described in connection with Fig. 10. Method 1000 is in embodiments performed by a device, such as device 128. More specifically, one or more hardware and software components may be involved in performing method 1000. The method 1000 may be executed as a set of computer-executable instructions executed by a computer system and encoded or stored on a computer-readable medium. Hereinafter, the method 1000 shall be explained with reference to the systems, components, modules, software, etc. described in conjunction with Figs. 1-6.

Method 1000 may continuously flow in a loop, flow according to a timed event, or flow according to a change in an operating or status parameter. Method 1000 is initiated at step 1004. Step 1004 may start with a mobile key server 128 receiving sequence data 344. The sequence data 344 may pertain to one or more routes a mobile device 104 is to complete. Alternatively, or in addition, mobile device server 128 may create, retrieve, or access sequence data according to a planned route of one or more mobile devices 104. At step 1012, the mobile key server 344 may receive access control key data, such as key data 348. Key data 348 may comprise one or more keys for use along a predetermined or planned route. Alternatively, or in addition, the mobile key server 344 may access or retrieve the access control key data 348 from one or more storage locations and/or devices.

At step 1016, the mobile key server 128 may receive information from a mobile device 104. Such information may comprise one or more of a location, a pass code, an indication that an access control key was successfully utilized, and an indication signifying that the mobile device 104 is ready to receive one or more access control keys. For example, the mobile device 104 may indicate to the mobile server 128 that it requires and is ready to receive an access control key 308. At step 1020, the mobile key server 128 then determines whether or not the sequence data and/or key data 348 require updating. For example, based on at least some of the information received from the mobile device 104 in step 1016, the mobile key server 128 may determine that the sequence data 344 received in step 1008 requires updating. Alternatively, or in addition, the mobile key server 128 may determine that the access control keys received in step 1012 require updating. If neither the sequence data nor the key data require updating, method 1000 moves to step 1024, where the mobile key server 128 determines whether or not the mobile device 104 is ready to receive an access control key, for example access control key 308.

The determination made by the mobile key server 128 as to whether or not the mobile device 108 is ready to receive an access control key may be based on the information received from the mobile device 104 in step 1016. For example, the mobile key server 128 may receive information comprising the location of the mobile device 104. If the mobile device 104 is not within a specific location, then the mobile key server 128 may not send or deliver an access control key to the mobile device 104; instead, the mobile key server 128 determines that the mobile device 104 is not ready to receive an access control key and the method returns to step 1016. Alternatively, or in addition, the method 1000 may end at step 1032.

As another example, the information received in step 1016 may indicate that the mobile device 104 is in a specific location, successfully utilized a previous access control key, and is ready to receive a new access control key. At step 1028, the mobile key server 128 sends or delivers an access control key 208 to the mobile device 104. Once the access control key sent by the mobile key server 128 is received at the mobile device 104, the method 1000 ends at step 1032.The sequence module 316 and/or the key management module 304 may determine whether or not an update is needed based on the received access control key(s) and/or the received sequence data. For example, if the sequence module 316 receives sequence data 344, 416 having a single sequence data 604, the sequence module 316 may check the sequence information 352 to determine if the sequence position 620, and optionally the sequence id 616, match sequence information 352 that has already been received. If there is a match, sequence module 316 may determine that the sequence information 352 requires and update. Alternatively, or in addition, key management module 304 may receive access control key data 348, 412 with one or more access control keys. The key management module 304 may check the stored access control keys (308) to determine whether or not any of the stored access control keys (308) match the newly received access control key. If there is a match, key management module 304 may determine that the access control keys require and update.

If, at step 1020, the mobile key server 128 determines that the access control keys and/or the sequence information requires updating, method 1000 continues at step 1036. For example, the mobile key server 128 may receive location data pertaining to the mobile device 104 in step 1016 indicating that the mobile device 104 has changed a route or deviated from a predetermined course. The mobile key server 128, upon verifying that the course deviation is allowable, may update the sequence data 344 and/or the key data 348 in steps 1036 and 1040. Upon completing an update, method 100 may continue at step 1024 where it is determined whether or not the mobile device 104 is ready to receive an access control key.

In particular, method 1000 may be utilized to ensure that the mobile device 104 only has access to one key at a time; that is, mobile device 104 would not have access to all of the access control keys for a route or course simultaneously. For example, the mobile key server 128 may receive information from the mobile device 104 indicating that the mobile device 104 is ready to receive an access control key (step 1024). The mobile server 128 may then send one access control key to the mobile device 104. The access control key may be sent according to the sequence information. Upon successfully using the access control key, the mobile device 104 may disable, delete, or send the access control key back to the mobile key server 128. Upon receiving an indication that the access control key was deleted, disabled, or sent back (step 1016), the mobile key server 128 may then send the next access control key to the mobile device 104. Again, the next access control key may correspond to the next location in a planned or determined route or course.

Moreover, in some embodiments and consistent with the present disclosure, the mobile server 128 may determine whether or not to send the access control key based on a variety of factors and/or rules. For example, an access control key may be sent from the mobile key server 128 to the mobile device 104 upon on one or more criteria or events having been satisfied; these criteria may correspond to a location, a time, gps, or other rules that specify when an access control key can be delivered to a mobile device 104. In one instance, an access control key may be sent once one or more other access control keys have been utilized. In such a scenario, a dependency is created; the access control key to be sent depends on one or more other access control keys having been utilized. Additionally, an access control key may be sent from the mobile key server 128 to the mobile device 104 according to a specific time; for example, the mobile key server 128 may cause the access control key to be delivered to the mobile device only between the hours of 10:00 am and 11:15 am. Alternatively, or in addition, the mobile key server 128 may send the access control key to the mobile device 104 based on the location of the mobile device 104 being within a predetermined distance of a specified location or object. As another example, an access control key may be delivered to a mobile device 104 when the mobile device 104 is within 100 meters of an access control reader, within 100 meters of another mobile device 104, and/or after having passed within 100 meters of a particular location and/or another mobile device 104. Additionally, a mobile key server 128 may send an access control key based on a combination of criteria. For example, an access control key may be sent after one or more access control keys have been utilized, between 12:15 pm and 12:25 pm, and only after the mobile device 104 has passed within 150 meters of a particular building located halfway through a planned route.

In the foregoing description, for the purposes of illustration, methods were described in a particular order. It should be appreciated that in alternate embodiments, the methods may be performed in a different order than that described. It should also be appreciated that the methods described above may be performed by hardware components or may be embodied in sequences of machine-executable instructions, which may be used to cause a machine, such as a general-purpose or special-purpose processor or logic circuits programmed with the instructions to perform the methods. These machine-executable instructions may be stored on one or more machine readable mediums, such as CD-ROMs or other type of optical disks, floppy diskettes, ROMs, RAMs, EPROMs, EEPROMs, magnetic or optical cards, flash memory, or other types of machine-readable mediums suitable for storing electronic instructions. Alternatively, the methods may be performed by a combination of hardware and software.

Specific details were given in the description to provide a thorough understanding of the embodiments. However, it will be understood by one of ordinary skill in the art that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Also, it is noted that the embodiments were described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

While illustrative embodiments of the invention have been described in detail herein, it is to be understood that the inventive concepts may be otherwise variously embodied and employed, and that the appended claims are intended to be construed to include such variations, except as limited by the prior art.

### ASPECTS

1. A method for managing a sequence of access control keys comprising:
   receiving one or more access control keys at a mobile device;
   determining whether or not the one or more received access control keys are valid; and
   presenting at least one valid access control key to an access control reader.
2. The method for managing access control keys of aspect 1, further comprising:
   receiving, at the mobile device, sequence data associated with the one or more access control keys.
3. The method for managing access control keys of aspect 1, further comprising:
   receiving, at the mobile device, sequence data associated with the one or more access control keys, wherein one or more received access control keys are determined to be valid based on a use of a previously presented access control key designated by the received sequence data.
4. The method for managing access control keys of aspect 1, further comprising:
   receiving, at a mobile device, sequence data associated with the one or more access control keys;
   ordering the one or more received access control keys based upon the received sequence data; and
   selecting at least one access control key to determine whether or not he the at least one access control key is valid.
5. The method for managing access control keys of aspect 4, wherein the at least one selected access control key corresponds to a route a user is to follow.
6. The method for managing access control keys of aspect 4, wherein the one or more received access control keys are determined to be valid based on a use of a previously presented access control key designated by the received sequence data.
7. The method for managing access control keys of aspect 1, wherein the one or more access control keys are received in an order in which the one or more access control keys are to be presented to an access control reader.
8. The method for managing access control keys of aspect 1, wherein at least one of the one or more received access control keys update an access control key already residing on the mobile device.
9. The method for managing access control keys of aspect 2, wherein the received sequence data alters an access control key to which the received one or more access control keys depend.
10. The method for management access control keys of aspect 2, wherein the sequence data further includes additional criteria for determining whether the one or more received access control keys are valid.
11. The method for managing access control keys of aspect 10, wherein the one or more received access control keys may be determined to be valid based upon the mobile device having passed within a predetermined distance of one or more locations.
12. The method for managing access control keys of aspect 10, wherein the one or more received access control keys may be determined to be valid based upon a schedule.
13. A non-transitory computer readable medium with instructions stored thereon that when executed by a processor performs the method of aspect 1.
14. An access key control system, comprising:
   one or more mobile devices comprising:
      a wireless communication module;
      a memory configured to store one or more access control keys, wherein the one or more access control keys are received via the wireless communication module;
      a memory configured to store a key management module, wherein the key management module is configured to manage one or more access control keys;
      a processor operatively connected to the mobile device, wherein the processor is configured to execute the key management module; and
   one or more mobile key servers, wherein the mobile key server is operative to provide one or more access control keys to the one or more mobile devices; and
   wherein one or more access control keys are presented to an access control reader to gain access to a protected asset.
15. The access key control system of aspect 14, wherein the memory is further configured to store a sequence data module, wherein the sequence data module receives sequence data from the one or more key servers; the sequence data being associated with the one or more access control keys, wherein one or more of the stored access control keys are determined to be valid based on a use of a previously presented access control key designated by the stored sequence data.
16. The access key control system of aspect 15, wherein the key management module orders the one or more provided access control keys based upon the stored sequence data, and wherein the key management module selects at least one access control key to determine whether or not the at least one access control key is valid.
17. The access key control system of aspect 16, wherein the at least one selected access control key corresponds to a route a user is to follow.
18. The access key control system of aspect 14, wherein the one or more access control keys are provided in an order in which the one or more access control keys are to be presented to an access control reader.
19. The access key control system of aspect 15, wherein at least one of the one or more provided access control keys update an access control key already stored in the memory.
20. The access key control system of aspect 15, wherein the provided sequence data alters an access control key to which the provided one or more access control keys depend.
21. A method for delivering one or more access control keys comprising:
   sending one or more access control keys to a mobile device, wherein the one or more access control keys are sent to the mobile device based upon a previous access control key having been utilized.
22. The method of aspect 21, further comprising:
   receiving an indication, from the mobile device, indicating that the mobile device is ready to receive one or more access control keys.
23. The method of aspect 21, wherein the one or more access control keys are sent to the mobile device based upon sequence data.
24. The method of aspect 21, wherein the previous access control key having been utilized further comprises the previous access control key having been presented to an access control reader.
25. The method of aspect 21, wherein the one or more access control keys are sent to the mobile device based upon one or more of location, time, and sequence data.
26. A method for delivering one or more access control keys to a mobile device, the method comprising:
   selecting at least one access control key to send to the mobile device; and
   sending the at least one access control key to the mobile device, wherein the at least one access control key is selected based upon a previous access control key having been utilized.
27. The method of aspect26, wherein the at least one access control key is selected based upon sequence data.
28. The method of aspect 27, wherein the sequence data includes data indicating an order in which one or more access control keys are to be utilized.
29. The method of aspect 26, wherein the previous access control key having been utilized further comprises the previous access control key having been presented to an access control reader.
30. An access key control system, comprising:
   one or more mobile key servers comprising a memory configured to store one or more access control keys, a memory configured to store sequence data, a memory configured to store processor executable instructions, and a processor operatively connected to the mobile key server and configured to execute the processor executable instructions, the processor executable instructions comprising instructions to:
   select at least one access control key to send to a mobile device; and
   send the at least one access control key to the mobile device, wherein the at least one access control key is selected based upon a previous access control key having been utilized.
31. An access key control system, comprising:
   one or more mobile key servers comprising:
   one or more access control keys; and
   sequence data, wherein the sequence data indicates which of the one or more access control keys are to be sent to the one or more mobile devices.
32. The access key control system of aspect 31, wherein the sequence data further indicates an order in which the one or more access control keys are to be sent to the one or more mobile devices.

## Claims

1. An access key control system, comprising:
one or more mobile key servers (128) comprising a memory configured to store a plurality of access control keys (308), a memory configured to store sequence data (344), a memory configured to store processor executable instructions, and a processor operatively connected to the mobile key server (128) and configured to execute the processor executable instructions, the processor executable instructions comprising instructions to:
receive information indicating whether a previous access control key was successfully utilized by a mobile device (104) presenting the same to an access control reader (116);
select at least one access control key (308) from the plurality of access control keys to send to the mobile device (104) according to the sequence data; and
send the at least one access control key (308) to the mobile device based upon the indication of whether the previously presented access control key was successfully utilized.

2. The access key control system of claim 1, further comprising
one or more mobile devices (104) comprising:
a wireless communication module (232);
a memory (312) configured to store one or more access control keys (308), wherein the one or more access control keys are received via the wireless communication module (232);
a memory (205, 252) configured to store a key management module (304), wherein the key management module is configured to manage one or more access control keys (308); and
a processor (204, 208) operatively connected to the mobile device (104), wherein the processor is configured to execute the key management module (304),
wherein one or more access control keys (308) are respectively presented to one or more access control readers (116) to gain access to a protected asset (120).

3. The access key control system of claim 2, wherein the key management module (304) orders the one or more received access control keys (308) based upon an order received.

4. The access key control system of claim 3, wherein the order received corresponds to a route a user is to follow.

5. The access key control system of claim 1, wherein the received information comprises an indication that the mobile device disabled the previous access control key, deleted the previous access control key, or sent the previous access control key back.

6. The access key control system of claim 1, wherein sending the at least one access control key (308) to the mobile device based upon the indication that the previously presented access control key was utilized comprises sending the at least one access control key (308) to the mobile device only if the indication indicates that the previously presented access control key was successfully utilized.

7. A method, performed by a mobile key server (128), for delivering a plurality of access control keys (308) to a mobile device (104), comprising:
receiving information indicating whether a previous access control key was successfully utilized by the mobile device presenting the same to an access control reader;
selecting at least one access control key (308) from the plurality of access control keys to send to the mobile device (104) according to sequence data; and
sending the at least one access control key (308) to the mobile device based upon the indication of whether the previously presented access control key was successfully utilized.

8. The method of claim 7, wherein the sequence data relates to sequence data in which the plurality of access control keys (308) are to be presented to one or more access control readers.
